# EUROPEAN PATENT SPECIFICATION

(11) **EP 2 924 282 B1**
(45) Date of publication and mention of the grant of the patent: **29.04.2020**
(21) Application number: 14161511.2
(22) Date of filing: 25.03.2014
(51) Int. Cl.: F03D 80/00, F03D 80/80, F03D 80/10, F03D 13/20

(54) **Reinforcement of a wind turbine tower**
Verstärkung eines Windturbinenturms
Renforcement d'une tour de turbine éolienne

(43) Date of publication of application: 30.09.2015
(73) Proprietor: Siemens Gamesa Renewable Energy A/S, 7330 Brande (DK)
(72) Inventor: Jensen, Rasmus, 7100 Vejle (DK); Smedegaard, Thomas, 8230 Abyhoj (DK)
(74) Representative: Aspacher, Karl-Georg

(56) References cited:
- EP-A1- 2 388 411
- EP-A2- 1 544 460
- WO-A1-2006/077084
- DE-U1-202009 015 675

## Description

The invention relates to a reinforcement of a wind turbine tower.

A wind turbine comprises a rotor, a nacelle and a wind turbine tower. The rotor of the wind turbine is connected to the nacelle and the nacelle is arranged on top of the tower.

The wind interacts with the rotor of the wind turbine and rotates the rotor. In addition, the wind induces loads and vibrations into the rotor. The loads and vibrations are transferred from the rotor to the nacelle and into the tower of the wind turbine.

The tower of the wind turbine has to be constructed in a way to withstand the loads and vibrations of the wind acting on the wind turbine. Thus the tower of a wind turbine has to be built quite rigid.

The tower of the wind turbine has to be manufactured and transported to the construction site of the wind turbine. Thus the tower is limited in size and mass.

By making the tower more rigid more material is used to build the tower. Thus the tower will get heavier, and is thus more difficult to be transported and erected.

Therefore, the use of additional material to build the tower is avoided.

A wind turbine tower comprises several installations at the outside of the tower wall. These can be warning lights for air traffic for example, or antennas.

These installations have to be wired with electric cables. The cables can be installed at the outside of the wall of the tower but the installation of cables along the outside of the tower wall is time consuming and expensive.

It is therefore known to arrange holes that go through the outside wall of the tower to connect the cables to the installations at the outside wall of the tower.

Holes going through the outside wall of the tower weaken the structure of the tower. It is known to weld a bushing at the rim of the hole to strength the tower structure and compensate the loss of strength resulting from the hole in the wall of the tower.

EP 2388411 A1 describes a wind turbine tower, whereby the tower contains a door opening, which is prepared to allow passage into the tower. The door opening is reinforced by a strip, which is attached to the circumference of the door opening by attachment means.

Also DE 202009015675 U1 describes a tower segment of a tube shaped tower comprising a tower wall with an opening to allow access to the interior of the tower, whereby the area adjacent to the opening is reinforced to compensate for the weakening due to the opening, whereby the tower segment is manufactured by using a piece of sheet metal with an increased thickness in the area around the opening.

To weld a bushing to the wall of the tower, shows the disadvantage that the tower needs to be certified again.

EP 1 544 460 B1 describes a wind turbine with a tower, that comprises at least one obstacle warning light that is emitting light to the outside. The tower comprises a hole and at least one supply line for at least one obstacle warning light is installed from the inside of the tower to the outside. The position and the size of the hole are determined in a way that the stability and function of the tower are not affected. The break-through through the tower wall is arranged to go through the flanges of the tower segments.

WO 2006/077084 A1 describes a rod-shaped light for marking a tower or a tower element, particularly a wind power plant, with lights is provided in the form of a rod-shaped holder, first end of which being provided with illuminating means and the second end being provided with illuminating means connections. In order to equip a tower, in particularly, an already erected wind power plant or a tower element for a wind power plant that has not yet been erected, with a marking by lights, the rod-shaped light extends from the inside through a borehole in the tower wall so that the illumination means radiate in the surrounding area of the tower.

This shows the disadvantage that a break-through in a tower wall can only be arranged in the area were two tower segments are connected. The position of a break-through in a tower wall is therefore limited to certain levels of heights of the tower.

The aim of the invention is therefore to provide an improved arrangement for holes in the wind turbine tower.

The object of the invention is achieved by the independent claim 1. Further features of the invention are disclosed in the dependant claims.

A reinforcement of a wind turbine tower is disclosed, whereby the wall of the tower comprises a through-going opening that connects the inner side of the wall of the tower to the outer side of the wall of the tower.

A reinforcement plate is attached to the wall of the tower surrounding the through-going opening, so that the wall of the tower is reinforced to compensate the loss of stability caused by the through-going opening in the wall of the tower.

The reinforcement plate comprises an opening that corresponds to the through-going opening and the wall of the tower, so that the openings are prepared and arranged in a way to receive an electric facility.

A wind turbine comprises a rotor that is connected to a nacelle, and the nacelle is arranged on top of a tower. The tower is a closed hollow structure with a wall. The tower supports the nacelle and the rotor of the wind turbine.

In addition, forces are transferred from the rotor to the nacelle and from there to the tower into the ground. Thus, the tower has to be strong and ridged enough to support the nacelle and the rotor, and to transfer the forces from the rotor and the nacelle to the ground.

The wall of the tower of the wind turbine comprises a through-going opening. The through-going opening connects the outer side of the tower wall to the inner side of the tower wall. The through-going opening is used to install electric facilities, like air traffic warning lights, antennas or cables, also including fiber optic cables, that lead from the inner side of the tower to the outer side of the tower wall.

A through-going opening in a tower wall weakens the wall of the tower. A reinforcement plate is attached to the wall of the tower surrounding the through-going opening. Thus, the wall of the tower is reinforced in the areas surrounding the through-going opening to compensate the loss of stability caused by the through-going opening in the wall of the tower.

Thus, the wall of the tower shows the same strength in the area of the through-going opening, as the normal tower wall without an opening would show. Thus, the through-going opening, reinforced by the reinforcement plate, does not weaken the strength of the wall of the tower.

The reinforcement plate comprises an opening that corresponds to the through-going opening in the wall of the tower. The openings are prepared and arranged in a way to receive an electric facility. The wall of the tower comprises a through-going opening and also the reinforcement plate comprises a through-going opening. The opening of the tower wall and the opening of the reinforcement plate correspond in a way that they can be used to install or to house an electric facility.

The through-going opening in the tower wall and the opening in the reinforcement plate form one opening through the reinforcement plate and the tower wall, when the reinforcement plate is connected to the tower wall. Thus, an electric facility can be installed through the through-going opening in the tower wall.

Thus, an electric facility can be installed at the outside of the tower of the wind turbine from the inside of the tower of the wind turbine through the opening in the reinforcement plate and in the tower wall.

Thus, the electric facility can be installed from inside of the tower.

In addition, the electric facility can be reached, and thus exchanged from the inside of the tower. Thus, it is not necessary to use a crane to reach the electric facilities that are installed at the outside of the tower wall.

Thus, the installation of the electric facilities and also service and maintenance for these facilities is much easier, quicker and less expensive.

In addition, the area around the hole in the tower wall that is needed to install or to reach the electric facility is reinforced. Thus, the loss of stability caused by the hole in the tower wall is compensated by the reinforcement plate.

The opening in the reinforcement plate has at least the same dimension than the through-going opening in the wall of the tower.

Thus, the size of the opening in this tower wall is not reduced by the reinforcement plate attached to the tower wall.

Thus, the electric facility can be installed or exchanged through the opening in the tower wall and the opening in the reinforcement plate.

The opening in the reinforcement plate and the through-going opening in the wall of the tower correspond to each other in size and position.

Thus, the opening in the reinforcement plate has the same size than the through-going opening in the tower wall. The reinforcement plate is attached to the tower wall in a way that the opening in the reinforcement plate and the opening in the tower wall correspond to each other in position.

Thus, the opening in the reinforcement plate and the opening in the tower wall work together in a way that they form one through-going opening that goes through the reinforcement plate and the tower wall.

Thus, the sizes of the openings and the reinforcement plate and in the tower wall are optimized and the loss of material in the tower wall and in the reinforcement plate is minimized.

The reinforcement plate is attached to the wall of the tower in a way that forces are transfer between the reinforcement plate and the wall of the tower, so that the wall of the tower is reinforced by the reinforcement plate.

The tower of the wind turbine transfers forces from the rotor and the nacelle of the wind turbine to the ground. Thus, forces are transferred in the wall of the tower.

A through-going opening in the wall of the tower disrupts the transfer of forces in the tower wall.

The reinforcement plate is attached to the wall of the tower in a way that forces are transferred from the tower wall into the reinforcement plate, and from the reinforcement plate back into the tower wall.

The disruption of the transfer of forces at the opening in the tower wall leads to a loss in the strength of the tower wall. The transfer of forces from the tower wall into the reinforcement plate and back into the tower wall in the area around the opening in the tower wall compensates the loss of strength at the opening in the tower wall.

Thus, the reinforcement of the tower wall by the reinforcement plate compensates the loss of strength of the tower wall due to the opening in the tower wall. Thus, the opening in the tower wall has no effect on the strength of the tower wall.

The wall of the tower comprises a certain radius and the reinforcement plate comprises mainly the same radius than the wall of the tower, so that the area of contact between the reinforcement plate and the wall of the tower is maximized.

A tower of a wind turbine is normally round seen in a horizontal crosscut through the tower. Thus, the tower comprises a certain radius. Thus, the tower wall comprises a certain radius.

The reinforcement plate comprises mainly the same radius than the tower wall. Thus, the surface of the tower wall and the surface of the reinforcement plate show mainly the same radius.

Thus, the contact area between the reinforcement plate and the wall of the tower is maximized when reinforcement plate is connected to the wall of the tower.

The reinforcement plate comprises a plurality of holes and the holes are used with connection means to detachably attach the reinforcement plate to the wall of the tower.

The reinforcement plate is attached to the tower wall in a way that it can be detached later on.

Connection means are used to attach the reinforcement plate to the wall of the tower. Connection means can be bolds for example.

The reinforcement plate comprises a plurality of holes that can be used with the connection means. The number of holes present in the reinforcement plate depends on the strength of the forces that have to be transferred from the tower wall into the reinforcement plate and back from the reinforcement plate into the wall of the tower.

For a stronger reinforcement a higher number of holes can be selected for the reinforcement plate.

By using connection means like bolts, the structure of the tower wall is not influenced whereas a connection by welding would influence the structure of the material, in the case of a metal tower. This would lead to less elastic areas in the tower wall and could lead to cracks in the tower wall around the reinforcement plate. Thus, a connection by connection means like bolts is preferred.

The wall of the tower comprises a plurality of holes that correspond in their position to the plurality of holes of the reinforcement plate.

The holes are used by bolts to connect the reinforcement plate to the wall of the tower. The holes in the reinforcement plate and the holes in the wall of the tower correspond to each other in a way that bolts can be moved through the holes of the reinforcement plate and through the holes of the tower wall to connect the reinforcement plate to the wall of the tower.

Thus, bolts can be used that go through the wall of the tower and the reinforcement plate to transfer forces from the wall of the tower to the reinforcement plate and from the reinforcement plate to the wall of the tower.

The reinforcement plate is attached to the inner side of the wall of the tower.

Thus, the reinforcement plate is not visible from the outside of the tower and the visual impression of the tower is not influenced by the reinforcement plate.

In addition, the reinforcement plate is not exposed to weather conditions. Thus, the state of the reinforcement plate is not influenced by for example rain water or salty spray at an offshore wind turbine.

The opening in the reinforcement plate is closed by a cover plate that is detachably attached to the reinforcement plate.

Thus, the opening in the reinforcement plate is closed by the cover plate. Thus, no moisture like rain or salty spray can enter the interior of the tower through the opening in the tower wall and the opening in the reinforcement plate.

The electric facility is mounted to the cover plate.

The through-going opening in the tower wall and the opening in the reinforcement plate receive an electric facility. The opening and the reinforcement plate is covered by the cover plate. The electric facility is connected to the cover plate.

Thus, the electric facility can be removed together with the cover plate, when the cover plate is detached from the reinforcement plate. In addition, the opening in the reinforcement plate, and the opening in the tower wall is closed when the electric facility is installed.

The electric facility is an electric light, especially an air traffic warning light.

Air traffic warning lights need to be installed at the wind turbine. Air traffic warning lights are installed at the nacelle of the wind turbine and at the tower of the wind turbine. The air traffic warning lights need to be visible from outside of the wind turbine and in addition, they have to be easy accessible for service and maintenance.

The opening in the tower wall and the opening in the reinforcement plate receive an electric light especially an air traffic warning light.

Thus, the air traffic warning light can be installed through the opening and reinforcement plate and the opening in the tower wall, and in addition, the air traffic warning light can be easily reached from inside of the tower for service and maintenance.

Thus, there is no need to reach the air traffic warning light from outside of the tower. Thus, no crane is needed for service and maintenance of the air traffic warning light.

The electric facility is an antenna.

In some cases it is necessary or wanted to install antennas for high frequency data communication at the outside wall of the wind turbine tower.

The opening in the tower wall and the opening in the reinforcement plate receive an antenna as an electric facility.

Thus, the antenna can be installed from inside of the wind turbine tower, and in addition can be reached easily for service and maintenance. Thus, it is not necessary to reach the antenna from the outside of the wind turbine tower.

The electric facility is an electric cable and the opening is used as a cable feed-through.

Additional installations at the outside of the wind turbine tower might require a cable to be fed through an opening in the tower wall.

The opening in the tower wall can be reinforced with the reinforcement plate that is connected to the tower wall in the area of the opening in the tower wall. Thus, the cable can be fed through the tower wall through an opening in the tower wall, whereby the opening in the tower wall does not influence the capability of the tower wall to transfer forces.

Thus, it is not necessary to feed the cable through the tower wall at a special place like through a flange of the tower wall. The cable can be fed through the tower wall at the place where the cable is needed.

The invention is shown in more detail by the help of figures. The figures show a preferred configuration and do not limit the scope of the invention.
- FIG 1: shows a reinforcement of a wind turbine tower
- FIG 2: shows a reinforcement plate

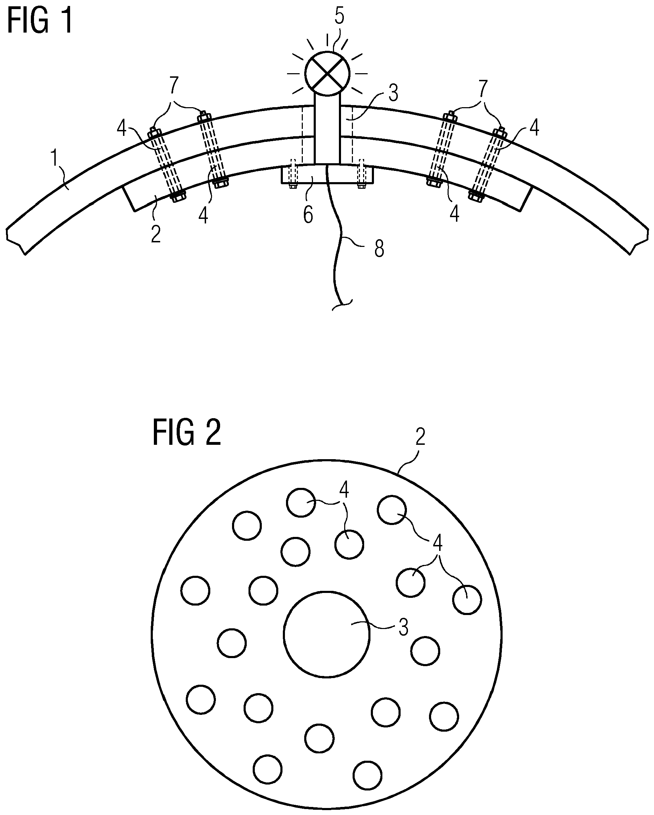

FIG 1 shows a reinforcement of a wind turbine tower.

FIG 1 shows a wall 1 of a wind turbine tower. The wall 1 of the wind turbine tower comprises a hole that is used for an electric facility 5.

The reinforcement plate 2 is attached to the wall 1 of the wind turbine tower. The reinforcement plate 2 comprises an opening 3 that corresponds in size and position to the opening in the wind turbine tower wall 1.

The wind turbine tower can be conical or cylindrical and shows a circular shape in a horizontal cut through the tower wall 1. Thus, the wall 1 of the tower comprises a certain radius.

The reinforcement plate 2 is attached to the inner side of the wall 1 of the wind turbine tower. The outer radius of the reinforcement plate 2 corresponds to the inner radius of the wall 1 of the wind turbine tower.

The reinforcement plate 2 comprises holes 4 for connection means 7. The holes 4 for the connection means 7 in reinforcement plate 2 correspond to holes in the wall 1 of the wind turbine tower.

The opening in the wall 1 of the wind turbine tower that is used for the electric facility 5 weakens the structure of the tower of the wind turbine. The reinforcement plate 2 is connected to the area around the opening in the wall 1 of the wind turbine tower.

The reinforcement plate 2 is connected to the wall 1 of the wind turbine tower by connection means 7. The connection means 7 transfer forces and loads of the tower wall 1 to the reinforcement plate 2. Thus, the reinforcement plate 2 strengthens the wall 1 of the wind turbine tower in the area of the opening for the electric facility 5.

In FIG 1, the electric facility 5 is a lamp. This can be an air traffic warning light, for example.

The electric facility 5 is connected to a cover plate 6 and a cover plate 6 is connected to the reinforcement plate 2. The electric connection for the electric facility 5 is established via an electric cable 8.

The cover blade 6 is connected to the reinforcement plate 2 at an inner side of the tower. When the cover plate 6 is connected to the reinforcement plate 2, the electric facility 5 is moved through the opening 3 and the reinforcement plate 2 and the wall 1 of the wind turbine tower.

The electric facility 5 reaches through the opening 3 and the reinforcement plate 2 and the wall 1 of the tower from the inside of the tower to the outside of the tower, so that the lamp is visible at the outer side of the tower.

Thus, the electric facility 5 can be installed or exchanged from the inner side of the tower. Also the electric connection 8 can be established from the inner side of the tower.

FIG 2 shows a reinforcement plate.

FIG 2 shows a reinforcement plate 2 that is used for the reinforcement of the wind turbine tower. The reinforcement plate 2 comprises an opening 3. In addition, the reinforcement plate 2 comprises holes 4 for connection means.

The reinforcement plate 2 is connected to the tower wall by establishing a connection by connection means through the holes 4 of the reinforcement plate 2.

The reinforcement plate 2 is connected to the wall of the wind turbine tower in a way that the opening 3 and the reinforcement plate 2 correspond to an opening in the wall of the wind turbine tower.

Thus, the reinforcement plate 2 covers the area around the hole in the wind turbine tower.

The connection means arranged in the holes 4 transfer loads and forces from the wall of the wind turbine tower to the reinforcement plate 2. A plurality of holes 4 are distributed over the area of the reinforcement plate 2.

The forces and loads from the wind turbine tower wall can be transferred via the reinforcement plate 2 from one side of the opening in the tower wall to the other side of the opening in the tower wall.

Thus, the area around the wall in the wind turbine tower is reinforced by the reinforcement plate 2.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Reinforcement of a wind turbine tower,
- whereby the wall (1) of the tower comprises a through-going opening, that connects the inner side of the wall (1) of the tower to the outer side of the wall (1) of the tower,
- whereby a reinforcement plate (2) is attached to the wall (1) of the tower surrounding the through-going opening, so that the wall (1) of the tower is reinforced to compensate the loss of stability caused by the through-going opening in the wall (1) of the tower,
- whereby the reinforcement plate (2) comprises an opening (3) that corresponds to the through-going opening in the wall (1) of the tower, so that the openings are prepared and arranged in a way to receive an electric facility (5), whereby the electric facility is an electric light or an antenna or an electric cable,
- whereby the reinforcement plate (2) is attached to the inner side of the wall (1) of the tower, **characterized in that** the opening (3) in the reinforcement plate (2) is closed by a cover plate (6) that is detachably attached to the reinforcement plate (2)
- whereby the electric facility is mounted to the cover plate
- whereby, the wall (1) of the tower comprises a certain radius, and that the reinforcement plate (2) comprises mainly the same radius than the wall (1) of the tower, so that the area of the contact between the reinforcement plate (2) and the wall (1) of the tower is maximized.

2. Reinforcement of a wind turbine tower according to claim 1, **characterized in that** the opening (3) in the reinforcement plate (2) has at least the same dimension then the through going opening in the wall (1) of the tower.

3. Reinforcement of a wind turbine tower according to one of the preceding claims, **characterized in that** the opening (3) in the reinforcement plate (2) and the through going opening in the wall (1) of the tower correspond to each other in size and position.

4. Reinforcement of a wind turbine tower according to one of the preceding claims, **characterized in that** the reinforcement plate (2) is attached to the wall (1) of the tower in a way that forces are transferred between the reinforcement plate (2) and the wall (1) of the tower, so that the wall (1) of the tower is reinforced by the reinforcement plate (2).

5. Reinforcement of a wind turbine tower according to one of the preceding claims, **characterized in that** the reinforcement plate (2) comprises a plurality of holes (4) and that the holes (4) are used with connection means (7) to detachably attach the reinforcement plate (2) to the wall (1) of the tower.

6. Reinforcement of a wind turbine tower according to one of the preceding claims, **characterized in that** the wall (1) of the tower comprises a plurality of holes that correspond in their position to the plurality of holes (4) of the reinforcement plate (2), and that the holes are used by bolts to connect the reinforcement plate (2) to the wall (1) of the tower.

7. Reinforcement of a wind turbine tower according to one of the preceding claims, **characterized in that** the electric facility (5) is mounted to the cover plate (6).

8. Reinforcement of a wind turbine tower according to one of the preceding claims, **characterized in that** the electric facility (5) is an electric light, especially an air traffic warning light.

9. Reinforcement of a wind turbine tower according to one of the claims 1 to 7, **characterized in that** the electric facility (5) is an antenna.

10. Reinforcement of a wind turbine tower according to one of the preceding claims, **characterized in that** the electric facility (5) is an electric cable (8) and that the opening (3) is used as a cable feed-through.

## Patentansprüche

1. Verstärkung für einen Windturbinenturm,
- wobei die Wand (1) des Turms eine durchgehende Öffnung umfasst, die die Innenseite der Wand (1) des Turms mit der Außenseite der Wand (1) des Turms verbindet,
- wobei eine Verstärkungsplatte (2) so an der die durchgehende Öffnung umgebende Wand (1) des Turms angebracht ist, dass die Wand (1) des Turms zum Ausgleich für den durch die durchgehende Öffnung in der Wand (1) des Turms verursachten Stabilitätsverlust verstärkt wird,
- wobei die Verstärkungsplatte (2) eine Öffnung (3) umfasst, die der durchgehenden Öffnung in der Wand (1) des Turms entspricht, so dass die Öffnungen auf solche Weise hergestellt und angeordnet sind, dass sie eine elektrische Einrichtung (5) aufnehmen, wobei es sich bei der elektrischen Einrichtung um ein elektrisches Licht oder eine Antenne oder ein Stromkabel handelt,
- wobei die Verstärkungsplatte (2) an der Innenseite der Wand (1) des Turms angebracht ist, **dadurch gekennzeichnet, dass** die Öffnung (3) in der Verstärkungsplatte (2) durch eine Abdeckplatte (6) verschlossen ist, die lösbar an der Verstärkungsplatte (2) angebracht ist,
- wobei die elektrische Einrichtung an der Abdeckplatte angebracht ist,
- wobei die Wand (1) des Turms einen bestimmten Radius aufweist, und dass die Verstärkungsplatte (2) im Wesentlichen den gleichen Radius aufweist wie die Wand (1) des Turms, so dass sich die Kontaktfläche zwischen der Verstärkungsplatte (2) und der Wand (1) des Turms maximiert.

2. Verstärkung für einen Windturbinenturm nach Anspruch 1, **dadurch gekennzeichnet, dass** die Öffnung (3) in der Verstärkungsplatte (2) zumindest das gleiche Maß aufweist wie die durchgehende Öffnung in der Wand (1) des Turms.

3. Verstärkung für einen Windturbinenturm nach einem der vorhergehenden Ansprüche, **dadurch gekennzeichnet, dass** die Öffnung (3) in der Verstärkungsplatte (2) und die durchgehende Öffnung in der Wand (1) des Turms die gleiche Größe und Position aufweisen.

4. Verstärkung für einen Windturbinenturm nach einem der vorhergehenden Ansprüche, **dadurch gekennzeichnet, dass** die Verstärkungsplatte (2) auf solche Weise an der Wand (1) des Turms angebracht ist, dass Kräfte zwischen der Verstärkungsplatte (2) und der Wand (1) des Turms übertragen werden, so dass die Wand (1) des Turms durch die Verstärkungsplatte (2) verstärkt wird.

5. Verstärkung für einen Windturbinenturm nach einem der vorhergehenden Ansprüche, **dadurch gekennzeichnet, dass** die Verstärkungsplatte (2) mehrere Löcher (4) umfasst und die Löcher (4) mit Verbindungsmitteln (7) dazu verwendet werden, die Verstärkungsplatte (2) lösbar an der Wand (1) des Turms anzubringen.

6. Verstärkung für einen Windturbinenturm nach einem der vorhergehenden Ansprüche, **dadurch gekennzeichnet, dass** die Wand (1) des Turms mehrere Löcher umfasst, die die gleiche Position aufweisen wie die mehreren Löcher (4) der Verstärkungsplatte (2), und dass die Löcher dazu verwendet werden, die Verstärkungsplatte (2) über Bolzen mit der Wand (1) des Turms zu verbinden.

7. Verstärkung für einen Windturbinenturm nach einem der vorhergehenden Ansprüche, **dadurch gekennzeichnet, dass** die elektrische Einrichtung (5) an der Abdeckplatte (6) angebracht ist.

8. Verstärkung für einen Windturbinenturm nach einem der vorhergehenden Ansprüche, **dadurch gekennzeichnet, dass** es sich bei der elektrischen Einrichtung (5) um ein elektrisches Licht, insbesondere eine Hindernisbefeuerung für den Luftverkehr, handelt.

9. Verstärkung für einen Windturbinenturm nach einem der Ansprüche 1 bis 7, **dadurch gekennzeichnet, dass** es sich bei der elektrischen Einrichtung (5) um eine Antenne handelt.

10. Verstärkung für einen Windturbinenturm nach einem der vorhergehenden Ansprüche, **dadurch gekennzeichnet, dass** es sich bei der elektrischen Einrichtung (5) um ein Stromkabel (8) handelt und die Öffnung (3) als Kabeldurchführung benutzt wird.

## Revendications

1. Renforcement d'une tour d'éolienne,
- par lequel la paroi (1) de la tour comprend une ouverture traversante, qui relie le côté interne de la paroi (1) de la tour au côté externe de la paroi (1) de la tour,
- par lequel une plaque de renforcement (2) est fixée à la paroi (1) de la tour en encerclant l'ouverture traversante, de sorte que la paroi (1) de la tour est renforcée pour compenser la perte de stabilité causée par l'ouverture traversante dans la paroi (1) de la tour,
- par lequel la plaque de renforcement (2) comprend une ouverture (3) qui correspond à l'ouverture traversante dans la paroi (1) de la tour, de sorte que les ouvertures sont préparées et agencées de manière à recevoir une installation électrique (5), par lequel l'installation électrique est un voyant électrique ou une antenne ou un câble électrique,
- par lequel la plaque de renforcement (2) est fixée sur le côté interne de la paroi (1) de la tour,
**caractérisé en ce que** l'ouverture (3) dans la plaque de renforcement (2) est fermée par une plaque de recouvrement (6) qui est fixée de manière détachable à la plaque de renforcement (2)
- par lequel l'installation électrique est montée sur la plaque de recouvrement
- par lequel la paroi (1) de la tour présente un certain rayon, et **en ce que** la plaque de renforcement (2) présente principalement le même rayon que la paroi (1) de la tour, de sorte que la surface du contact entre la plaque de renforcement (2) et la paroi (1) de la tour est maximisée.

2. Renforcement d'une tour d'éolienne selon la revendication 1, **caractérisé en ce que** l'ouverture (3) dans la plaque de renforcement (2) possède au moins la même dimension que l'ouverture traversante dans la paroi (1) de la tour.

3. Renforcement d'une tour d'éolienne selon l'une des revendications précédentes, **caractérisé en ce que** l'ouverture (3) dans la plaque de renforcement (2) et l'ouverture traversante de la paroi (1) de la tour correspondent l'une à l'autre en taille et position.

4. Renforcement d'une tour d'éolienne selon l'une des revendications précédentes, **caractérisée en ce que** la plaque de renforcement (2) est fixée à la paroi (1) de la tour d'une manière telle que des forces sont transférées entre la plaque de renforcement (2) et la paroi (1) de la tour, de sorte que la paroi (1) de la tour est renforcée par la plaque de renforcement (2).

5. Renforcement d'une tour d'éolienne selon l'une des revendications précédentes, **caractérisé en ce que** la plaque de renforcement (2) comprend une pluralité de trous (4) et **en ce que** les trous (4) sont utilisés avec des moyens de liaison (7) pour fixer de manière détachable la plaque de renforcement (2) à la paroi (1) de la tour.

6. Renforcement d'une tour d'éolienne selon l'une des revendications précédentes, **caractérisé en ce que** la paroi (1) de la tour comprend une pluralité de trous qui correspondent en leur position à la pluralité de trous (4) de la plaque de renforcement (2), et **en ce que** les trous sont utilisés par des boulons pour relier la plaque de renforcement (2) à la paroi (1) de la tour.

7. Renforcement d'une tour d'éolienne selon l'une des revendications précédentes, **caractérisé en ce que** l'installation électrique (5) est montée sur la plaque de recouvrement (6).

8. Renforcement d'une tour d'éolienne selon l'une des revendications précédentes, **caractérisé en ce que** l'installation électrique (5) est un voyant électrique, en particulier un voyant de signalisation pour le trafic aérien.

9. Renforcement d'une tour d'éolienne selon l'une des revendications 1 à 7, **caractérisé en ce que** l'installation électrique (5) est une antenne.

10. Renforcement d'une tour d'éolienne selon l'une des revendications précédentes, **caractérisé en ce que** l'installation électrique (5) est un câble électrique (8) et **en ce que** l'ouverture (3) est utilisée comme un passe-câble.
